Europäisches Patentamt

European Patent Office

Office européen des brevets

(11) Veröffentlichungsnummer : **0 307 560 B1**

(12) **EUROPÄISCHE PATENTSCHRIFT**

(45) Veröffentlichungstag der Patentschrift :
24.04.91 Patentblatt 91/17

(51) Int. Cl.⁵ : **B62D 33/00**

(21) Anmeldenummer : 88110600.9

(22) Anmeldetag : 02.07.88

(54) **Auflageelement.**

(30) Priorität : 20.07.87 DE 8709930 U

(43) Veröffentlichungstag der Anmeldung :
22.03.89 Patentblatt 89/12

(45) Bekanntmachung des Hinweises auf die
Patenterteilung :
24.04.91 Patentblatt 91/17

(84) Benannte Vertragsstaaten :
AT BE CH DE ES FR GB GR IT LI LU NL SE

(56) Entgegenhaltungen :
AT-B- 321 740
DD-A- 225 676

(56) Entgegenhaltungen :
DE-A- 1 605 931
DE-A- 2 109 332
DE-B- 1 964 943
US-A- 3 266 837

(73) Patentinhaber : Wenger, Peter
Route de Neuchâtel
CH-1530 Payerne (CH)

(72) Erfinder : Schäfer, Götz
Rue des Lilas 6
CH-1530 Payerne (CH)

(74) Vertreter : Müller, Enno et al
Rieder & Partner Corneliusstrasse 45
W-5600 Wuppertal 11 (DE)

## Beschreibung

Die Erfindung betrifft ein Lagerungselement mit den Merkmalen des Oberbegriffes des Anspruches 1.

Bei Kraftfahrzeugen, insbesondere Lastkraftfahrzeugen, ist es bekannt, Bordwände oder Elemente von Bordwänden in einem Fassungsprofil zu lagern. Beispielsweise können schwenkbare Bordwände von Lastkraftwagen derartig ausgebildet sein. In den Lagerungsbereichen ergibt sich ein Problem durch einen relativ heftigen Verschleißangriff der Bordwände oder der Teile der Bordwände. Die rauhen Einsatzbedingungen eines Lastkraftwagens führen zu erheblichen Erschütterungen, welche sich auf die Bordwände und die Teile der Bordwände übertragen und in Lagerungsbereichen aufzunehmen sind. In diesem Zusammenhang ist es bereits vorgeschlagen worden, (vergleiche DE-U-87 04 916) einen Abriebschutz in Form eines Kunststoffelementes vorzusehen, das austauschbar angeordnet ist. Dieses führt jedoch noch nicht zu einer zufriedenstellenden Lebensdauer des Abriebschutzes. Weiter ist ein Dichtungselement im Bereich eines Lagerungselementes aus der DE-A-1 605 931 bekannt geworden, wobei sich jedoch in gleicher Weise das Problem der nachteilig kurzen Lebensdauer des Abriebschutzes stellt.

Bislang mußten daher solche Lagerungselemente oder zumindest die eingesetzten Kunststoffelemente in relativ kurzen Abständen ausgetauscht oder erneuert werden.

Im Hinblick auf den Stand der Technick (siehe aum Beispiel DE-U-87 04 916 gemäß dem Oberbegriff des Anspruch 1) stellt sich die Erfindung die Aufgabe, das bekannte Lagerungselement derart zu verbessern, daß ein möglichst geringer Verschleißangriff auch bei rauhen Einsatzbedingungen eines Kraftfahrzeuges, insbesondere eines Lastkraftfahrzeuges, gegeben ist.

Diese Aufgabe ist bei einem Lagerungselement mit den Kennzeichneden Merkmalen des Anspruches 1 gelöst.

Es hat sich gezeigt, daß ein Kerbschlagfestes Kunststoffteil, das überdies noch geringfügig längsverschiebbar angeordnet ist, dem Verschleißangriff einen überraschend hohen Widerstand entgegensetzt bzw. überraschend gering überhaupt verschleißt. Das Fassungsprofil, welches auf dem Lagerungselement bzw. genauer auf dem Polyamidteil aufliegt und aufgrund der Erschutterungen etc. sich gegenüber dem Lagerungselement, wenn auch nur geringfügig, bewegt, kann sich zusammen mit dem Polyamidteil bewegen. Die Relativbewegung tritt so, jedenfalls zum Teil, zwischen dem Polyamidteil un dem Lagerungselement auf. Daß das Polyamidteil in seinem Fassungsbereich sehr glatt gearbeitet sein kann, entsprechend auch das Lagerungselement in dem Fassungsbereich für das Polyamidteil, ist bei der Relativbewegung zwischen dem Polyamidteil und dem Lagerungselement ein wesentlich geringerer Verschleißangriff gegeben als bei einer Relativbewegung zwischen dem Fassungsprofil und dem Polyamidteil. Der Gestaltung, daß das Polyamidteil geringfügig längsverschieblich angeordnet ist, kommt auch selbständige Bedeutung zu. Das verschiebliche Teil muß auch nicht notwendig aus Polyamid bestehen.

Vorteilhaft kann das Polyamidteil in Form einer Leiste ausgebildet sein und in einer Nut in dem Lagerungselement angeordnet sein. Bevorzugt ist hier, um die Verschiebbarkeit zu ergeben, daß die Nut eine größere Länge aufweist als die Leiste. Damit ist die Leiste in der Nut längsverschiebbar.

In vorteilhafter Ausgestaltung ist die Nut in Form einer Schwalbenschwanzführung ausgebildet und die Leiste weist entsprechende Flankenbereiche auf, die in der Schwalbenschwanzführung gleiten.

Das Lagerungselement kann angeordnet sein etwa am Boden einer Lastwagenseitenwand zur Lagerung von aufliegenden Fassungsprofilen. Darüber hinaus kann das Lagerungselement aber auch als überstehende Lagerungswange eines Fassungsprofils selbst ausgebildet sein. Meist erstreckt sich die Lagerungswange im eingebauten Zustand senkrecht und lagert, aufgrund einer Klemmhalterung, ein weiteres Fassungsprofil. Der Bereich des Fassungsprofils, welcher mit der Lagerungswange eines benachbarten Fassungsprofils zusammenwirkt, kann in gleicher Weise in Form eines hier beschriebenen Lagerungselementes ausgebildet sein. Bei dieser Ausgestaltung liegen entsprechend im Lagerungszustand zwei Polyamidteile aufeinander.

Hinsichtlich des kerbschlagfesten Polyamidteils ist besonders bevorzugt, daß dieses Teil aus Polyamid 6 besteht.

Nachstehend ist die Erfindung noch anhand der beigefügten Zeichnung weiter im einzelnen erläutert, auf welcher zeigt:

Fig. 1 eine Seitenansicht eines Lastwagens mit Fassungsprofilen ;

Fig. 2 einen Querschnitt durch zwei zuaammenwirkende Fassungsprofile, von denen eines mit einer Lagerungswange ausgestattet ist und

Fig. 3 einen weiteren Querschnitt durch zwei zusammenwirkende Fassungsprofile, wobei das eine Fassungsprofil einen Verriegelungsmechanismus besitzt.

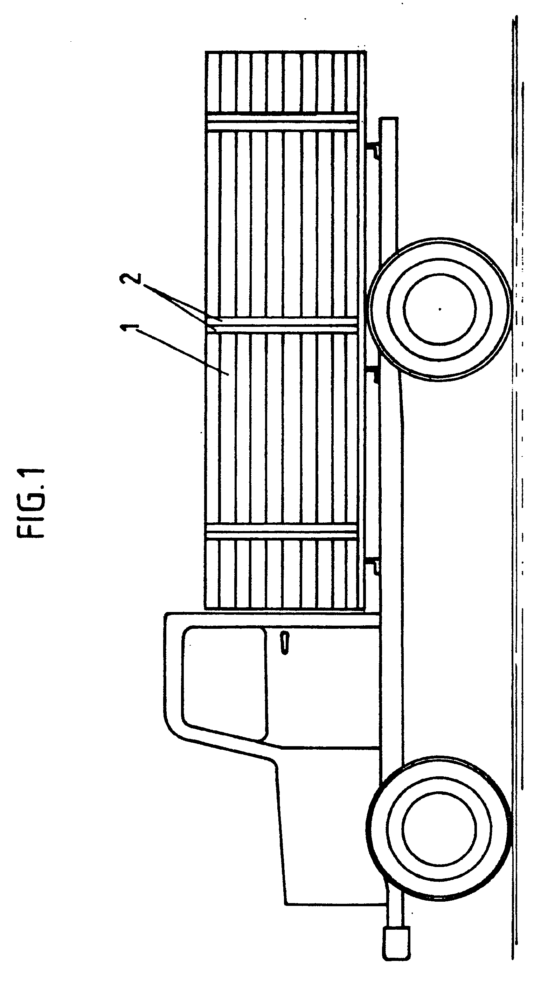

In Fig. 1 ist zunächst, schematisch, ein Lastkraftwagen dargestellt, welcher in seinem Beladungsbereich Wandelemente 1 besitzt, die durch Passungsprofile 2 gehaltert werden.

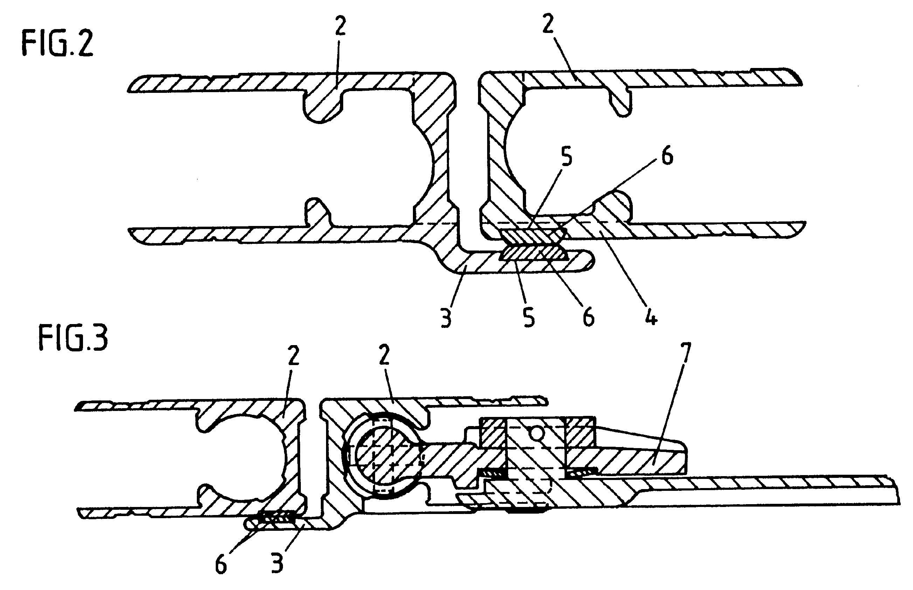

In Fig. 2 ist ein Zusammenwirkungsbereich solcher Fassungprofile 2 in Querschnitt dargestellt.

Das in der Zeichnung linke Fassungsprofil 2 besitzt eine Lagerungswange 3, welcher das in der Zeichnung rechte Fassungsprofil 2 gehaltert anliegt. In der Lagerungswange 3 wie auch in dem Gegenlagerungsbereich 4 des in der Zeichnung rechten Fassungsprofils 2 ist jeweils in einer Nut 5 ein Polyamidteil 6 gehaltert. Bei dem Polyamidteil handelt es sich speziell um Polyamid 6.

Die Nuten 5 sind in ihren Seitenbereichen hinterschnitten ausgebildet und entsprechend die Polyamidteile 6 zur Halterung darin geformt.

Die Nuten 5 sind zumindestens in einem der Teile, der Lagerungswange 3 oder dem Halterungsbereich 4 mit einer größeren Länge vorgesehen, als die Polyamidteile 6, so daß ein Polyamidteil 6 sich, wenn auch nur geringfügig, in einer Nut 5 in Längsrichtung bewegen kann.

In der Darstellung gemäß Fig. 3 sind zwei weitere Fassungsprofile 2 im Querschnitt dargestellt, bei welchen das in der Zeichnung rechte Fassungsprofil 2 mit einer Lagerungswange 3 ausgebildet ist und bei welchem Ausführungsbeispiel lediglich in der Lagerungswange 3 ein Polyamidteil 6 angeordnet ist. Das in der Fig. 3 rechts dargestellte Fassungsprofil 2 besitzt einen Verriegelungsmechanismus mit einem Verriegelungshebel 7, wodurch eine Klemmhalterungskraft zur Halterung des in der Fig. 3 linken Fassungsprofils 2 hervorbringbar ist.

In der Zeichnung nicht dargestellt ist, daß ein Lagerungselement mit einer kerbeschlagfesten Leiste aus Polyamid auch zur unteren Abstützung der Randelemente 1, am Rand der Ladebodenfläche, vorgesehen sein kann.

## Ansprüche

1. Lagerungselement füu ein Fassungsprofil von Wandelementen von Kraftfahrzeugen, insbesondere von Lastkraftfahrzeugen, mit einem Zusammenwirkungsbereich, in welchem ein Abriebschutz in Form eines austauschbaren Kunststoffelementes (6) vorgesehen ist, dadurch gekennzeichnet, daß das Kunststoffelement ein Kerbschlagfestes Polyamidteil (6) ist, das im eingebauten Zustand, zumindest geringfügig, längsverschiebbar angeordnet ist.

2. Lagerungselement nach Anspruch 1, dadurch gekennzeichnet, daß das Polyamidteil (6) eine Leiste ist und in einer Nut (5) angeordnet ist.

3. Lagerungselement nach Anspruch 2, dadurch gekennzeichnet, daß die Nut (5) eine größere Länge aufweist als die Leiste.

4. Lagerungselement nach Anspruch 2 oder 3, dadurch gekennzeichnet, daß die Nut (5) in Form einer Schwalbenschwanzführung ausgebildet ist.

5. Lagerungselement nach einem der Ansprüche 1 bis 4, dadurch gekennzeichnet, daß das Lagerungselement als überstehende Lagerungswange (3) des Fassungsprofils (2) ausgebildet ist.

6. Lagerungselement nach einem der Ansprüche 1 bis 5, dadurch gekennzeichnet, daß das Polyamidteil (6) aus Polyamid 6 besteht.

## Claims

1. Mounting element for a holding profile of wall elements of motor vehicles, in particular of heavy goods vehicles, with an area of interaction, in which protection against friction is provided in the form of an exchangeable plastic element (6), characterised in that the plastic element is a notched impact-resistant polyamide part (6), which, in the fitted state, is arranged, at least slightly, longitudinally displaceably.

2. Mounting element according to Claim 1, characterised in that the polyamide part (6) is a strip and is arranged in a groove (5).

3. Mounting element according to Claim 2, characterised in that the groove (5) has a greater length than the strip.

4. Mounting element according to Claim 2 or 3, characterised in that the groove (5) is designed in the form of a dovetail guide.

5. Mounting element according to one of Claims 1 to 4, characterised in that the mounting element is designed as projecting mounting side piece (3) of the holding profile (2).

6. Mounting element according to one of Claims 1 to 5, characterised in that the polyamide part (6) consists of polyamide 6.

## Revendications

1. Elément d'appui pour un profilé d'engagement de ridelles de véhicules automobiles, en particulier de camions, présentant une zone de coopération dans laquelle est prévue une protection contre l'abrasion sous la forme d'un élément amovible (6) en matière plastique, caractérisé en ce que l'élément en matière plastique est une pièce en polyamide (6) résistante aux chocs et à l'entaille qui est disposée, à l'état monté et au moins dans une faible mesure, glissante dans la direction longitudinale.

2. Elément d'appui selon la revendication 1, caractérisé en ce que la pièce en polyamide (6) est une baguette et est disposée dans une rainure (5).

3. Elément d'appui selon la revendication 2, caractérisé en ce que la rainure (5) présente une plus grande longueur que la baguette.

4. Elément d'appui selon la revendication 2 ou 3, caractérisé en ce que la rainure (5) est un guidage en queue d'aronde.

5. Elément d'appui selon l'une des revendications 1 à 4, caractérisé en ce que l'élément d'appui est réalisé sous la forme d'une joue d'appui en saillie (3) du profilé d'engagement (2).

6. Elément d'appui selon l'une des revendications 1 à 5, caractérisé en ce que la pièce en polyamide (6) est en polyamide 6.

# FIG.1

EP 0 307 560 B1

FIG.2

FIG.3

EP 0 307 560 B1